# EUROPÄISCHE PATENTSCHRIFT

(11) **EP 1 870 303 B1**
(45) Veröffentlichungstag und Bekanntmachung des Hinweises auf die Patenterteilung: **17.02.2010**
(21) Anmeldenummer: 07009485.9
(22) Anmeldetag: 11.05.2007
(51) Int. Cl.: B60S 1/60

(54) **Positioniereinrichtung für einen Deckel einer Scheinwerferreinigungsanlage**
Positioning device for the cover of a headlamp cleaning device
Dispositif de positionnement pour un couvercle d'une installation de nettoyage de phare

(30) Priorität: 24.06.2006 DE 102006029069
(43) Veröffentlichungstag der Anmeldung: 26.12.2007
(73) Patentinhaber: Dr. Ing. h.c. F. Porsche Aktiengesellschaft, 70435 Stuttgart (DE)
(72) Erfinder: Keller, Markus, 71229 Leonberg (DE); Beer, Adrian, 71032 Böblingen (DE); Kruschhausen, Heinz-Arno, 75446 Wiernsheim (DE)

(56) Entgegenhaltungen:
- EP-A- 1 512 595
- EP-A1- 1 046 560
- DE-A1- 19 626 179
- FR-A1- 2 681 031
- FR-A1- 2 874 578

## Beschreibung

Die Erfindung bezieht sich auf eine Positioniereinrichtung für einen Deckel einer Scheinwerferreinigungsanlage nach dem Oberbegriff des Anspruchs 1.

Aus der DE 199 18 759 A1 ist an einem Deckel zum Abschluss einer Öffnung für eine Scheinwerferreinigungsanlage bzw. für eine Düse dieser Anlage in einem Außenwandteil eines Kraftfahrzeugs eine Zentrierung bekannt, die innenseitig des Deckels angeordnet ist und den Deckel zur Öffnung hin in der Ruhestellung fixiert.

Aus der FR-A1 2874578 ist eine Positioniereinrichtung für einen Deckel an einer Scheinwerferreinigungsanlage bzw. von Düsen hierfür bekannt. Der Deckel ist in einem Fahrzeugbugteil gehalten und in eine Ruhe- und in eine Betriebsposition ein- und ausfahrbar angeordnet. Im eingefahrenen Zustand der Scheinwerferreinigungsanlage ist die Öffnung vom Deckel geschlossen und im ausgefahrenen Zustand ist der Deckel von der Öffnung abgehoben. Am Umfang der Öffnung sind mehrere Rastaufnahmen vorgesehen, die korrespondierend zu entsprechend ausgeführten vorstehenden Rastnasen am Deckel angeordnet sind. Im eingefahrenen Zustand des Deckels greifen die Rastnasen in die Rastaufnahmen ein.

Aufgabe der Erfindung ist es, eine Positioniereinrichtung für einen Deckel einer Scheinwerferreinigungsanlage zu schaffen, die bei einem Einfahren von Scheinwerferreinigungsdüsen aus einer Betriebsposition in eine Ruheposition eine genaue Lage in einer Ausprägung eines Fahrzeugbugteils gewährleistet.

Diese Aufgabe wird erfindungsgemäß durch die Merkmale des Anspruchs 1 gelöst. Weitere vorteilhafte Merkmale der Erfindung beinhalten die Unteransprüche.

Die mit der Erfindung hauptsächlich erzielten Vorteile bestehen darin, dass eine genaue Positionierung des die Scheinwerferreinigungsdüse haltenden Deckels in einer Ein- bzw. Ausprägung eines Fahrzeugbugteils durch mehrere sich ergänzende Rastaufnahmen bzw. Rastnasen erfolgt. Insbesondere ist nach der Erfindung vorgesehen, dass am Umfang der Öffnung mehrere Rastaufnahmen vorgesehen sind, die korrespondierend zu entsprechend ausgeführten vorstehenden Rastnasen am Deckel angeordnet sind und im eingefahrenen, geschlossenen Zustand (Ruheposition) des Deckels die Rastnasen in die Rastaufnahmen eingreifen oder umgekehrt. Der Deckel ist in der sogenannten Ausprägung bzw. Einprägung des Fahrzeugbugteils angeordnet und ist im geschlossenen Zustand (Ruheposition) niveaugleich mit der Außenoberfläche des Bugteils über die Rastaufnahmen und Rastnasen lagegenau positioniert angeordnet. Durch diese eingelassene Anordnung des Deckels im Fahrzeugbugteil ist es erforderlich, dass die Fuge um den Deckel herum von gleicher Breite ist, was durch die positionierend wirkenden Rastaufnahmen und Rastnasen gewährleistet wird.

Durch die Erfindung wird aufgrund der unterschiedlichen Ausrichtungen der Rastaufnahmen und der korrespondierenden hierzu angeordneten Rastnasen erreicht, dass der Deckel bei Einnahme der Ruheposition sich entsprechend ausrichten kann. Hierzu ist nach der Erfindung vorgesehen, dass die Rastaufnahmen an seitlichen Begrenzungskanten der Öffnung in der Ausprägung angeordnet sind, wobei zwei Rastaufnahme an einer inneren Begrenzungskante und die weitere Rastaufnahmen an der gegenüberliegenden äußeren Begrenzungskante angeordnet ist.

Insbesondere sind an den seitlichen Begrenzungskanten der Öffnung gegenüberliegend nutförmige Rastaufnahmen vorgesehen, denen im Deckel die vorstehenden Rastnasen gegenüberstehen. Die Abstützung der Rastnasen in den Rastausnehmungen erfolgt einerseits an den Längsseiten und andererseits an den Stirnseiten der Rastnasen.

Die vorstehenden Rastnasen im Deckel bestehen beispielsweise aus zwei parallel nebeneinander stehenden Rippen, welche in der nutförmigen Rastaufnahmen des Bugteils gehalten sind. Die nutförmigen Rastaufnahmen bestehen aus vorstehenden Nocken, die zwischen sich jeweils eine Quernut bilden.

Die weitere Rastaufnahme an der seitlichen Begrenzungskante der Öffnung des Bugteils besteht aus einem vorstehenden Nocken, der von vorstehenden Rippen der Rastnase am Deckel umgriffen wird.

Durch diese Anordnung der Rastaufnahmen mit in unterschiedlichen Richtungen zentrierenden Rastnasen des Deckels, ist sichergestellt, dass der Deckel genau positionierbar in der Ausprägung des Bugteils beim Einfahren von der Betriebsposition in die Ruheposition angeordnet ist.

Ein Ausführungsbeispiel der Erfindung ist in den Zeichnungen dargestellt und wird im Folgenden näher beschrieben.

Es zeigen
- Fig. 1: einen Vertikalschnitt durch ein Fahrzeugbugteil mit eingesetzter Scheinwerferreinigungsdüse und einem Deckel in Ruheposition,
- Fig. 2: eine Innenansicht auf den Deckel mit Rastungen,
- Fig. 3: eine Draufsicht auf das Fahrzeugbugteil mit Rastaufnahmen mit eingeschobenen Rastnasen des Deckels,

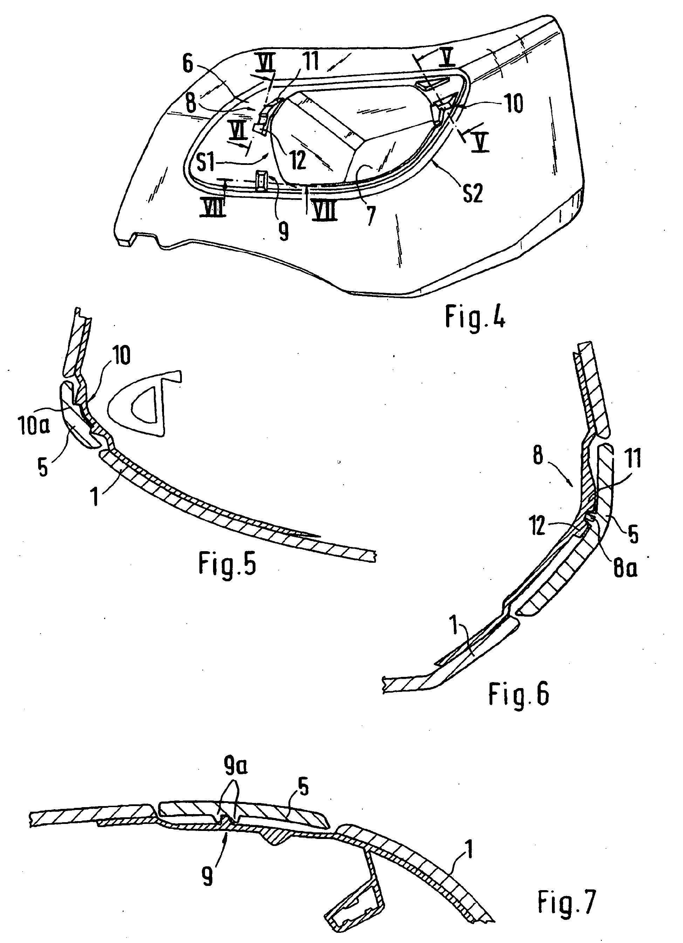

- Fig. 4: eine schaubildliche Darstellung auf die Rastausnehmungen gem. Fig. 3,
- Fig. 5: einen Schnitt durch eine erste Rastausnehmung an einer Seitenkante einer Öffnung auf der Ausprägung des Bugteils mit eingesetztem Deckel bzw. Rastnasen,
- Fig. 6: einen Schnitt durch eine zweite Rastausnehmung auf einer gegenüberliegenden Seitenkante der Öffnung mit eingesetztem Deckel bzw. Rastnase und
- Fig. 7: einen Schnitt durch eine dritte Rastausnehmung mit eingesetztem Deckel bzw. Rastnase.

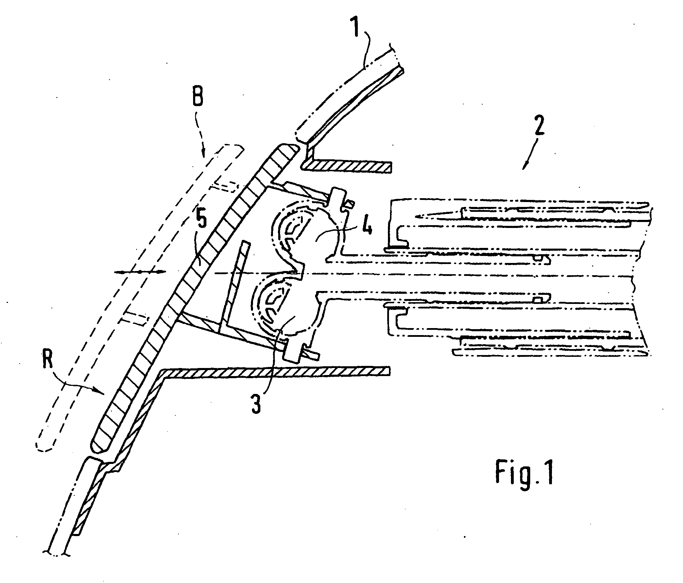

In einem Fahrzeugbugteil 1 ist zu beiden Seiten eines Fahrzeugs jeweils eine Scheinwerferreinigungsanlage mit einer oder zwei Wasserdüsen 3, 4 angeordnet, die in einer Betriebsposition B herausfahrbar und in einer Ruheposition R eingefahren sind, was in Fig. 1 näher dargestellt ist.

Die Düsen 3, 4 sind mit einem Deckel 5 verbunden, der in einer Ausprägung 6 des Fahrzeugbugteils 1 angeordnet ist, in welcher eine Öffnung 7 zum Durchtritt und Anordnung der Düsen 3, 4 für die Scheinwerferreinigungsanlage 2 aufweist, damit Scheinwerfergläser mit Wasser beaufschlagt werden können.

Zur Positionierung des eingefahrenen Deckels 5 in die Ausprägung 6 sind sogenannte Rastaufnahmen 8, 9 und 10 um die Öffnung 7 herum angeordnet. Korrespondierend zu diesen Rastaufnahmen 8, 9, 10 sind an der Innenseite des Deckels 5 Rastnasen 8a, 9a und 10a vorgesehen, die in Ruheposition R des Deckels 5 in den Rastausnehmungen 8, 9 und 10 gehalten werden.

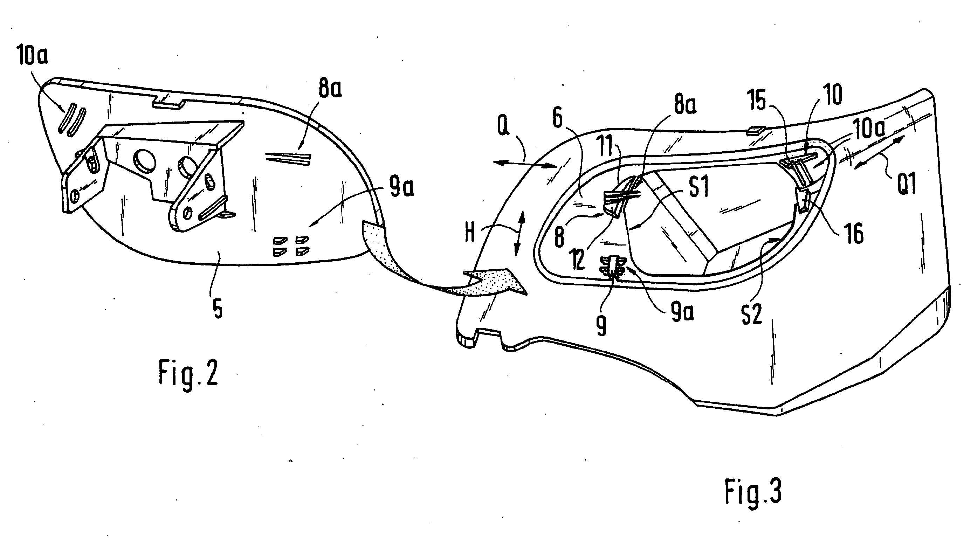

Die Rastausnehmungen 8, 9 und 10 sind an Seitenrändern S1 und S2 der Öffnung 7 angeordnet. Wie in Fig. 3 näher dargestellt, sind an der inneren Seitenkante S1 Rastaufnahme 8 und 9 und an der äußeren Seitenkante 2 ist eine Rastaufnahme 10 angeordnet.

Die Rastaufnahme 8 besteht aus zwei nockenförmigen Erhöhungen 11, 12 zwischen denen eine Quernut (in Bezug auf das Fahrzeug) zur Aufnahme einer Rastnase 8a des Deckels 5 gebildet wird. Diese Rastnase 8a besteht aus zwei querverlaufenden Rippen, welche sich mit den Seitenflanken an den nockenförmigen Erhöhungen 11, 12 abstützen.

Die weitere Rastaufnahme 9 besteht aus einem längsverlaufenden bzw. in Hochrichtung verlaufenden vorragenden Nocken, Rippe oder dgl., der beidseitig von Rastnasen 9a umfasst ist. Diese besteht aus zwei querverlaufenden Rippen, die mittig geteilt sind und zwischen sich den Nocken aufnehmen, an dem sie mit ihren Stirnkanten abgestützt werden. Die Rastaufnahme 10 am Seitenrand S2 besteht aus zwei vorragenden Nocken 15, 16, zwischen dem eine Quernut gebildet wird, in welche die Rastnase 10 a angeordnet ist, die aus zwei Rippen besteht, die sich endseitig an dem Nocken abstützen.

Der Deckel 5 ist somit beim Einfahren in die Ruheposition R in die Rastaufnahmen 8, 9 und 10 und die Rastnasen 8a, 9a und 10a in Hochrichtung H als auch in Querrichtung Q und in Schräg-Querrichtung Q1 in Grenzen verstellbar und somit lagegenau zu positionieren.

## Patentansprüche

1. Positioniereinrichtung für einen Deckel (5) an einer Scheinwerferreinigungsanlage bzw. von Düsen (3, 4) hierfür, die hinter einem Fahrzeugbugteil (1) gehalten und durch eine Öffnung (7) von einer Ruheposition (R) in eine Betriebsposition (B) ein- und ausfahrbar angeordnet sind, wobei im eingefahrenen Zustand (R) der Scheinwerferreinigungsanlage die Öffnung (7) vom Deckel geschlossen ist und im ausgefahrenen Zustand (B) der Deckel (5) von der Öffnung abgehoben ist, wobei am Umfang der Öffnung (7) mehrere Rastaufnahmen (8, 9, 10) vorgesehen sind, die korrespondierend zu entsprechend ausgeführten vorstehenden Rastnasen (8a, 9a, 10a) am Deckel (5) angeordnet sind und im eingefahrenen Zustand (Ruheposition R) des Deckels (5) die Rastnasen (8a, 9a, 10a) in die Rastaufnahme (8, 9, 10) eingreifen oder umgekehrt, **dadurch gekennzeichnet, dass** die Rastaufnahmen (8, 9, 10) an seitlichen Begrenzungskanten (S1, S2) der Öffnung (7) angeordnet sind, wobei zwei Rastaufnahmen (8, 9) an einer inneren Begrenzungskante (S1) und die weitere Rastaufnahme (10) an der gegenüberliegenden äußeren Begrenzungskante (S2) der Öffnung (7) angeordnet ist.

2. Positioniereinrichtung nach Anspruch 1, **dadurch gekennzeichnet, dass** an den seitlichen Begrenzungskanten (S1, S2) der Öffnung (7) gegenüber liegend nutförmige Rastaufnahmen (8, 10) vorgesehen sind, denen im Deckel (5) die vorstehenden Rastnasen (8a, 10a) gegenüberstehen und die vorstehenden Rastnasen (8a, 10a) am Deckel (5) aus zwei parallelen, nebeneinander stehenden Rippen bestehen, welche in der nutförmigen Rastaufnahme (8, 10) des Fahrzeugbugteils gehalten sind, die aus vorstehenden Nocken bestehen, die zwischen sich jeweils eine Quernut bilden.

3. Positioniereinrichtung nach den Ansprüchen 1 oder 2, **dadurch gekennzeichnet, dass** die weitere Rastaufnahme (9) an der seitlichen Begrenzungskante (S2) der Öffnung (7) des Bugteils (1) aus einem vorstehenden Nocken besteht, der von vorstehenden Rippen der Rastnase (9a) am Deckel (5) beidseitig umgriffen wird.

## Claims

1. Positioning device for a cover (5) on a headlight cleaning system or of nozzles (3, 4) for this, which are held behind a vehicle front-end part (1) and are arranged in a manner such that they can be retracted and extended from an inoperative position (R) into an operative position (B) through an opening (7), the opening (7) being closed by the cover in the retracted state (R) of the headlight cleaning system and the cover (5) being raised from the opening in the extended state (B), a plurality of latching mounts (8, 9, 10) being provided on the circumference of the opening (7) and are arranged in a corresponding manner to correspondingly designed, protruding latching lugs (8a, 9a, 10a) on the cover (5) and, in the retracted state (inoperative position R) of the cover (5), the latching lugs (8a, 9a, 10a) engage in the latching mounts (8, 9, 10) or vice versa, **characterized in that** the latching mounts (8, 9, 10) are arranged on lateral boundary edges (S1, S2) of the opening (7), with two latching mounts (8, 9) being arranged on an inner boundary edge (S1) and the further latching mount (10) being arranged on the opposite outer boundary edge (S2) of the opening (7).

2. Positioning device according to Claim 1, **characterized in that** groove-shaped latching mounts (8, 10) are provided opposite each other on the lateral boundary edges (S1, S2) of the opening (7) and the protruding latching lugs (8a, 10a) are located opposite them in the cover (5), and the protruding latching lugs (8a, 10a) on the cover (5) comprise two ribs which lie parallel next to each other and are held in the groove-shaped latching mount (8, 10) of the vehicle front-end part and which comprise protruding cams which form a transverse groove in each case between them.

3. Positioning device according to Claims 1 or 2, **characterized in that** the further latching mount (9) on the lateral boundary edge (S2) of the opening (7) of the front-end part (1) comprises a protruding cam which is engaged around on both sides by protruding ribs of the latching lug (9a) on the cover (5).

## Revendications

1. Dispositif de positionnement pour un couvercle (5) disposé au niveau d'une installation de nettoyage de phare et/ou de buses (3, 4) disposées à cette fin et maintenu derrière une partie avant du véhicule (1) et pouvant être disposé de façon rentrée et sortie à travers une ouverture (7) en passant d'une position de repos (R) dans une position de fonctionnement (B), l'ouverture (7) étant fermée par le couvercle à l'état rentré (R) de l'installation de nettoyage de phare et le couvercle (5) étant soulevé de l'ouverture à l'état sorti (B), plusieurs logements encliquetables (8, 9, 10) étant prévus au niveau du périmètre de l'ouverture (7), lesdits logements correspondant à des nez encliquetables (8a, 9a, 10a) présentant une saillie correspondante disposée au niveau du couvercle (5) et les nez encliquetables (8a, 9a, 10a) s'emboîtant à l'état rentré (position de repos R) du couvercle (5) dans les logements encliquetables (8, 9, 10) ou inversement, **caractérisé en ce que** les logements encliquetables (8, 9, 10) sont disposés au niveau des arêtes de délimitation (S1, S2) latérales de l'ouverture (7), deux logements encliquetables (8, 9) étant disposés au niveau d'une arête de délimitation (S1) intérieure et les autres logements encliquetables (10) étant disposés au niveau de l'arête de délimitation (S2) extérieure opposée de l'ouverture (7).

2. Dispositif de positionnement selon la revendication 1, **caractérisé en ce que** des logements encliquetables (8, 10) en forme de rainure opposée sont prévus au niveau des arêtes de délimitation (S1, S2) latérales de l'ouverture (7), lesdits logements du couvercle (5) se trouvant en face des nez encliquetables (8a, 10a) saillants et les nez encliquetables (8a, 10a) saillants se composant au niveau du couvercle (5) de deux nervures parallèles connexes maintenues dans les logements encliquetables (8, 10) en forme de rainure de la partie avant du véhicule, lesdits logements se composant de cames saillantes formant respectivement entre elles une rainure transversale.

3. Dispositif de positionnement selon les revendications 1 ou 2, **caractérisé en ce que** l'autre logement encliquetable (9) se compose au niveau de l'arête de délimitation (S2) latérale de l'ouverture (7) de la partie avant (1), d'une came saillante qui est emboîtée des deux côtés par les nervures saillantes du nez encliquetable (9a) au niveau du couvercle (5).
